# EUROPEAN PATENT SPECIFICATION

(11) **EP 3 678 073 B1**
(45) Date of publication and mention of the grant of the patent: **27.05.2026**
(21) Application number: 19150531.2
(22) Date of filing: 07.01.2019
(51) Int. Cl.: G06Q 10/06

(54) **METHOD AND SYSTEM FOR VEHICLE CONTROL SUPPORT**
VERFAHREN UND SYSTEM ZUR FAHRZEUGSTEUERUNGSUNTERSTÜTZUNG
PROCÉDÉ ET SYSTÈME DE SUPPORT DE COMMANDE DE VÉHICULE

(43) Date of publication of application: 08.07.2020
(73) Proprietor: HAT.tec GmbH, 85579 Neubiberg (DE)
(72) Inventor: Schmitt, Fabian, 81543 München (DE); Brand, Yannick, 85653 Aying (DE); Heilemann, Felix, 81543 München (DE); Schulte, Axel, 82054 Sauerlach (DE)
(74) Representative: Valvoda, Jakob

(56) References cited:
- SCHMITT FABIAN ET AL: "Mixed-Initiative Mission Planning Using Planning Strategy Models in Military Manned-Unmanned Teaming Missions", 2015 IEEE INTERNATIONAL CONFERENCE ON SYSTEMS, MAN, AND CYBERNETICS, IEEE, 9 October 2015 (2015-10-09), pages 1391 - 1396, XP032847333, DOI: 10.1109/SMC.2015.247
- BRAND YANNICK ET AL: "Model-based prediction of workload for adaptive associate systems", 2017 IEEE INTERNATIONAL CONFERENCE ON SYSTEMS, MAN, AND CYBERNETICS (SMC), IEEE, 5 October 2017 (2017-10-05), pages 1722 - 1727, XP033271193, DOI: 10.1109/SMC.2017.8122864

## Description

### TECHNICAL FIELD

The present disclosure relates to a method and a system for supporting an operator in controlling of vehicles. In particular, the present disclosure relates to a method for vehicle control support and a system for vehicle control support.

### BACKGROUND

Unmanned vehicles have gained importance in the civil as well as in the military sector. While in civil application, the unmanned vehicles are mainly employed for observation, image and video acquisition, delivery, rescue, and transportation, but also for recreation and sport competition, the military application range includes reconnaissance, transportation, rescue, information search, information retrieval, information delivery, but also contact to opposite party troops.

Vehicles according to the present disclosure include vehicles operating in space, air, in or on water, and on land. This includes a plurality of different vehicles. For examples, planes, helicopters, drones, cars, buses, HGVs, vans, tanks, trains, ships, submarines, space ships, motorbikes, subways, trams, etc. This list is not meant to be limiting, and refers to all sizes of vehicles as well.

Benefits of unmanned vehicles are manifold. They reduce several limitations that are a direct consequence of human contribution to a manned vehicle. Examples are: need for trained operators, operation breaks for rest, human error, etc.

Unmanned vehicles also increase overall safety for humans by reducing the danger that an on-board operator would face in hostile environments like under-water, in space, in extreme temperatures, or in combat situations.

Finally, elimination of human reaction time and human error can make unmanned vehicles more efficient and effective and can also lead to reduced energy and fuel consumption due to optimized operation of engines.

Remote control of unmanned vehicles is known in the art as is static programming for executing a set of commands. Also known is an operator, which is not necessarily close to an unmanned vehicle, manually planning a mission, which comprises several tasks for one or more vehicles. An example of manually planning is e.g. air traffic control, or a flight management system. A flight management system is provided in every modern commercial aircraft and is used by the aircraft crew for planning and modification of a route of the aircraft, but also for executing the planned route using the autopilot in a (partly) automated operation mode. Common manual planning of a route is very cumbersome, since every step of the route needs to be defined manually.

Further known are fully automated applications like air defense, where a system recognizes and executes a mission without operator input or control.

In most missions, operator attention and decision making is still a requirement. Due to the critical nature of many missions, for example rescue missions, reconnaissance missions, or passenger transport, and in particular in highly automated systems, operator decisions or operator confirmation of vehicle decisions is necessary. These decisions could refer to a variety of mission tasks including but not limited to selection of a landing spot, identification of a target, choice of routes, prioritizing of equally important tasks or elements, and many more.

Fully automated systems lack context awareness and recognition of meaningful alternatives beyond their original programming, and therefore even in these automated systems, for the time being, monitoring and regular confirmations and/or modifications of system decisions is required to ensure operation within pre-determined mission parameters and overall system safety.

Due to the criticality of some missions and the limited time resources during a mission and in particular when several decisions have to be made at the same time or within short time spans, stress levels for operators tend to be very high. This leads to detrimental effects on the operator health and also to an increase in control mistake probability due to human error. Further, when an operator is prompted to make several decisions at the same time, unnecessary waiting times may occur and task durations and overall mission time are prolonged unnecessarily.

Even if the vehicles used are automated or have some level of autonomy monitoring of the vehicles by an operator is desired or necessary, in order to avoid mistakes that occur due to wrong decisions by the vehicles.

Vehicles can prompt an operator for a decision or for confirmation of a vehicle decision. This demands attention of the operator and is considered an operator task. If more vehicles are involved, operator tasks can increase in number. Further, operator tasks can occur simultaneously, i.e. at the same time, but have to be executed consecutively by the operator. As a consequence, waiting times arise during which resources are consumed and, in particular during dangerous missions, during which vehicles possibly remain in hazard zones. As a result, overall mission expenses, overall mission duration, and overall mission risk increase.

In light of the aforementioned short-comings of the prior art the objective of the present disclosure is therefore supporting an operator in controlling of vehicles with reduced stress and optimized efficiency, effectiveness, and safety.

Schmitt Fabian et al.: "Mixed-Initiative Mission Planning Using Planning Strategy Models in Military Manned-Unmanned Teaming Missions", IEEE International Conference on Systems, Man, and Cybernetics, 2015, discloses a concept of cognitive pilot assistance for on-board mission planning, wherein complex multi-vehicle planning tasks and related monitoring tasks can be automated. A planning strategy model represents a pilots' mental process during planning. A pilot observer determines the pilot's current activities, which are analyzed to identify the pilot's planning progress. The planning progress and situational changes are used to shape an intervention policy.

Brand Yannick et al.: "Model-based prediction of workload for adaptive associate systems", IEEE International Conference on Systems, Man, and Cybernetics, 2017, discloses a method for predicting future mental states and workload of military helicopter crews, and how adaptive technical assistance is derived. A mission plan and a model of pilot tasks are the basis for predicting future task situations. Combined with knowledge of the mental resource demands of these task situations, workload peaks can be identified before they occur. A task-based, context-rich representation of the crews' mental state enables an adaptive associate system to support the crew, while preventing high-workload task situations. Therefore, the associate system changes the task sharing between the human operator and the automated system online by using different levels of automation and a restrained intervention strategy.

### SUMMARY

The present disclosure solves this aforementioned objective by a computer-implemented method, a planning device, a vehicle, and a computer program product according to the independent claims. Preferred embodiments are disclosed in the dependent claims.

According to a first aspect of the present disclosure, a computer-implemented method for vehicle control support is defined. The method comprises obtaining, by a planning device, mission information via an input unit of the planning device, the mission information at least comprising mission task information for at least one mission task; generating, by a processing unit of the planning device, operator task information for at least one operator task on the basis of the mission task information and a task model that is stored in the processing unit, wherein the operator task information comprises operator demand information; wherein the operator demand information comprise predictions for each corresponding operator task of whether operator attention is required; at what time operator attention is required; how long operator attention is required; and what type of attention is required; a generated mission plan on the basis of the mission task information, the operator task information, and the operator demand information using a cost metric stored in the processing unit, wherein the mission plan is generated to minimize temporal overlap of predicted operator attention for the operator tasks, on the basis of the type of attention.

The beneficial effects of the invention include that if two or more mission tasks result to overlapping attention demands for an operator, the mission tasks are straightened out, taking care not to conflict with the mission parameters. Demand peaks occurring while executing a mission are thereby reduced, and excessive demand situations are avoided where possible. In general, a demand peak occurs, if task situation requires more mental resources as could be provided by the operator. Consequences are therefore, performance decrements and human error.

According to a preferred embodiment of the first aspect, the step of obtaining further comprises receiving mission objective information via an input unit of the planning device; receiving mission type information via an input unit of the planning device; and identifying mission tasks required for the mission on the basis of the mission type information on the basis of the task model.

In another embodiment of the first aspect, the method further comprises providing the generated mission plan via an output unit of the planning device.

In yet another embodiment of the first aspect, the step of obtaining further comprises receiving a manufactured mission plan, via an input unit of the planning device; and determining demand peaks in the manufactured mission plan, and in the generated mission plan, wherein demand peaks indicate temporal overlap of operator attention for the operator tasks of the manufactured mission plan or of the generated mission plan; and wherein the method further comprises comparing the determined demand peaks of the manufactured mission plan with the demand peaks of the generated mission plan; and if it is determined that the generated mission plan comprises less or less extensive demand peaks than the manufactured mission plan, calculating proposed modifications to the manufactured mission plan which reduce the demand peaks in the manufactured mission plan; and indicating the calculated proposed modifications via an output unit of the planning device.

According to another embodiment of the first aspect, the method further comprises providing at least one of the determined demand peaks, the proposed modifications, the manufactured mission plan, and a modified mission, which incorporates the proposed modifications to the manufactured mission plan, together or individually, via the output unit of the planning device.

A second aspect of the present disclosure defines a planning device, configured to execute a method according to one embodiment of the first aspect.

According to a third aspect of the present disclosure a vehicle equipped with a planning device according to one embodiment of the second aspect is defined.

A fourth aspect of the present disclosure defines a computer program product including a program for a processing device, comprising software code portions for performing the steps according to one embodiment of the first aspect when the program is run on the processing device.

In one embodiment, the computer program product comprises a computer-readable medium on which the software code portions are stored, wherein the program is directly loadable into an internal memory of the processing device.

Aspects and embodiments of the present disclosure can support the operator of one or more vehicles. A planning device can provide this support to the operator. A planning device can plan a mission for one or more vehicles and generate a mission plan indicating the tasks that have to be performed to fulfil the mission. If the mission is complex, an optimized mission plan is desired to save time and resources.

A mission plan represents the entirety of all elements that are part of or affected by a mission. A mission plan includes a sequential order of tasks with consideration of temporal and logical constraints. Some of the constraints can refer to static parameters, like a defined starting time in dependence of a timetable, or a slot of time for landing or take-off at an airport. Other constraints are of logical nature and rely on previous tasks to be completed or certain events having taken place. Duration can be a constraint as well as availability of a particular vehicle or resource. Environmental constraints can exist, for example, a task, e.g. a rescue task, can only be started if a check for radioactive radiation has a negative result.

The loss of a vehicle, but also other incidents during the mission could require modifications to the mission plan. Examples of such incidents are changes in weather conditions, unexpected contact with opposing party troops, or change of mission objective.

Changes of weather conditions that could require modifying the mission plan could be bad weather clearing off, thereby improving visibility of the vehicles, and thus increasing the chance of detection, but also sudden changes to worse weather might require changes to the mission plan in case of a rescue operation or image recording mission for example.

If, contrary to prior planning, opposing troops are encountered, the mission plan might require amendments to either engage those troops or change the planned route to the mission target.

The mission plan might also be changed if the mission objective is changed, for example due to new information. Instead of one mountaineer to be rescued, newer information might indicate that a whole group requires evacuation or that the subject to be rescued has special transportation needs. Also, the location of the mission might be changed due to newer information, for example the animals to be filmed might have changed location or might have dived, making observation from flying vehicles impossible.

After a mission plan is established, an operator executes the mission and in that processes the mission plan by executing all mission tasks in the indicated order. Not every mission task requires an active action by the operator. If several vehicles are involved in a mission, the vehicles can be controlled by a driver or pilot or unmanned. Then the operator merely has a supervising role for some or all tasks.

As indicated above, some tasks require operator input, and therefore in consequence, during a mission an operator might be required to perform many operator tasks.

A planning device can assist an operator by generating an optimized mission plan, or by optimizing a mission plan manufactured by the operator. A corresponding planning device comprises an input unit for receiving input from the operator regarding the mission. This input can either be information regarding mission tasks, so that the planning device can generate the mission plan for the operator. But the input can alternatively be the mission plan manufactured by the operator. As a further alternative the input can merely specify the mission objective, so that the planning device can determine the necessary mission tasks before generating the mission plan.

The input unit can also be used to instruct posterior mission plan modifications as detailed above.

As an exemplary implementation, the input unit can indicate different elements. These elements can include locations, persons, groups of persons, vehicles, transmissions, freight, information, infrastructural parts, streets, areas, waypoints, etc. The input unit can be implemented as a map display, indicating the elements at their location or, if they are not at a location shown in the currently viewed section of the map, can be placed by the operator. The input unit can also be configured to accept and process speech input.

Each element can be implemented as a so-called object, which can have a certain object type and can refer to the data representation of the element. An object can be a variable, a data structure, a function, or a method, and as such, is a value in memory referenced by an identifier. Every object has status, behavior, and identity. An object's status comprises its attributes and relationships with other objects. An object's behavior is defined by its methods. And an object's identity is a unique identifier that allows an operator to address the correct object, even if two or more objects have the same status and behavior.

The planning device can have a list of objects, and also a list of object types.

The operator can specify mission objectives from a list of mission objectives with a specific object reference. For example, the mission localizing of a wounded person can have the object reference to the area which is to be searched. The assignment of an object and/or vehicle to a mission objective is also sometimes called instantiation.

A mission plan comprises one or more instantiated mission tasks, which can occur repeatedly in a mission with the same or with different object reference. For example, the mission surveillance of an object can be performed by two or more vehicles at the same time and at different times, and with the same object reference, which could be the object to be surveilled, or with different object reference.

The planning device further comprises a processing unit for processing of the input received from the operator or another device. The input data represent mission parameters like mission tasks or mission objectives for vehicles, and can include information about the available and non-available vehicles, and information about other resources.

Vehicles according to the present disclosure include vehicles operating in space, air, in or on water, and on land. This includes a plurality of different vehicles. For examples, planes, helicopters, drones, cars, buses, HGVs, vans, tanks, trains, ships, submarines, space ships, motorbikes, subways, trams, etc.

The vehicles can be manned or unmanned. This list is not meant to be limiting, and refers to all sizes of vehicles as well.

Vehicles and other resources are used to attain mission objectives. Information about vehicles and resources can include vehicle and resource attributes and capabilities like available number/amount, serial numbers, capability to move in/on land, water, air and space, camera capabilities, maximum number of passengers, maximum payload, etc. Resources can be defined to be limited or unlimited.

The operator of the vehicles can be the driver, helmsman, or pilot, and be located in one of the vehicles, but can also be located remotely.

Mission tasks are tasks for fulfilling the mission objectives. Mission task data includes purpose information for the task, for example relocation of a vehicle from one place to another, transport of freight from one place to another, recording of images or videos at a location using a particular sensor, takeoff of an aircraft, surveillance of an area, etc. Generally, concatenation of several mission tasks is necessary to fulfil the mission objectives. Some mission tasks can be required for fulfillment, others can be optional, or two or more can be alternatives to each other. A mission task can also be interpreted as a vehicle action step.

Operator tasks are tasks that an operator of a vehicle has to perform to fulfil the mission objective. The operator is prompted for an action during an operator task. Operator tasks can be very different from each other. One operator task might merely consist in confirming a proposed action, whether another operator task requires the operator to meticulously verify an automated calculation in order to confirm or change a planned route.

The operator can select a response from a selection of responses that is stored with the current mission task. The operator can also input other instructions to the vehicle that is the source of the prompt. The prompt can include a proposed response, which the planning device can determine based on predetermined information stored with the task, but can also be determined dynamically by an algorithm similar to autonomy algorithms.

An alternative response could be a stop or abort response, instructing the vehicle that is the source of the prompt, to abort the current mission task.

Depending on a predetermined setting, that the operator can change, the prompt has a particular response time, after which either a default response, the proposed response, an abort response, or no response can automatically be used for the further progression of the mission task and thereby the mission plan.

Mission tasks can be assigned to individual vehicles. Some vehicles can have specialized equipment or abilities, which are advantageous or required for a mission task. For example, one vehicle of a group could have the capacity to transport an almost drowned person, a special medical capability, or equipment for certain tasks like image recording or weather sensing. One vehicle could be able to hover or dive, which could facilitate certain tasks.

Ideally, required or beneficial characteristics or equipment will be present in more than one vehicle redundantly in case of loss of a vehicle.

The planning device further comprises an output unit for indicating the processed data to the operator. The output unit can be implemented as a graphical user interface or a text interface or a combination of both. Individual elements of the mission can be addressed by the operator. These elements include locations, persons, groups of persons, vehicles, transmissions, freight, information, infrastructural parts, etc. The output unit can be implemented as a map display, indicating the elements at their location or, if they are not at a location shown in the currently viewed section of the map, can be placed by the operator. The out unit can also be configured to process and deliver speech output.

The planning device obtains data via the input unit from the operator or another device. If the input data comprise mission objectives, the planning device can determine whether all mission tasks to fulfil the mission objectives are present in the input data, and if missing mission tasks are determined, complete the mission tasks from a database by using a corresponding algorithm. Using a task model stored in the processing unit of the planning device, the planning device can determine operator tasks that will result from the completed list of mission tasks.

If the planning device and method is used in an automated embodiment, a mission plan can be generated by using an algorithm. In the generated mission plan, the planning device arranges the mission tasks in such a manner that temporal overlapping of operator tasks is avoided or at least minimized. Preferably, the planning device considers whether any of the mission tasks can be performed by the operator simultaneously or not. Also, the duration of operator tasks is considered. The generated mission plan can be indicated to the operator using the output unit. Thereby operator demand peaks during the execution of the mission plan can be avoided or minimized.

If the planning device and method is used in an assisting embodiment, a mission plan can also be generated by using the algorithm. The generated mission plan is used for internal purposes only. In the generated mission plan, the planning device arranges the mission tasks in such a manner that temporal overlapping of operator tasks is avoided or at least minimized. Preferably, the planning device considers whether any of the mission tasks can be performed by the operator simultaneously or not. Also, the duration of operator tasks is considered. Then the generated mission plan can be compared with the mission plan manufactured by the operator. On the basis of the comparison, optimizing suggestions can be indicated to the operator using the output unit. Thereby operator demand peaks during the execution of the mission plan can be avoided or minimized.

During the comparison of the generated mission plan and the manufactured mission plan, the planning device analyses the manufactured mission plan without making modifications to it. The algorithm checks the manufactured mission plan regarding temporal overlapping operator tasks.

The algorithm of the planning device can determine whether the manufactured mission plan can be improved with regards to demand peaks and can generate proposed modifications. Also, a modified mission plan, implementing one or more proposed modifications on the manufactured mission plan can be generated by the planning device.

Generally, the output unit can indicate one or more of the determined demand peaks, the proposed modifications, the manufactured mission plan, and the modified mission plan together or individually. Although the generated mission plan is for internal reference of the planning device only, the output unit can be configured such that the generated mission plan can also be indicated to the operator. An example implementation could be a so-called expert mode, where these and further internal information can be indicated.

The operator can then select one or more of the proposed modifications to be implemented on the manufactured mission plan, whereon the output unit can dynamically apply the selected modifications and indicate a modified mission plan.

The indication of proposed modifications can also be regarded as a prompt for an operator action, as detailed above.

The input unit and the output unit can be implemented as one unit capable of performing input functions and output functions.

The task model comprises mission tasks and operator tasks. Both types of tasks can be linked to other tasks and to mission objectives. Constraints can be used to determine the relationship between tasks and mission objectives. An element of the task model can comprise task parameters like identifier or name, constraints, possible effects and outcomes, relationships to other elements. The task parameters can also comprise information about the demand for an operator that can arise from the mission task and the type of demand. This task specific demand can be expressed in a task specific demand vector. This vector can include information about the usage of the resources of the operator, characterizing what type of resources of the operator could be required by the task and how much of these resources might be required, for example in terms of average or predicted time.

Examples that require operator attention, i.e. operator tasks, are visual confirmation, calculation verification, target selection, communication response. Resource type for the operator's attention could be visual resource, cerebral resource, listening resource, and speaking resource.

The operator performing these operator tasks spends his resources in complying with the corresponding operator resource demand. If he needs to spend several resources at once or the same resource to several tasks, or a combination of both, a demand peak occurs. The demand of an operator is also called workload or task load of the operator.

Mission tasks can comprise prerequisites, which have to be met in order to be able to perform the mission task. Effects represent impacts that executing a task has on other task, vehicles, resources, persons, or other elements of the mission. Tasks can be organized hierarchically, and in particular, operator tasks can be assigned to a mission task.

The tasks in the model can be linked to other tasks by relationships. These indicate the operator tasks that have to be performed to fulfil a higher-level operator or mission task.

The tasks can be vehicle-specific, employing the special capabilities or equipment of the individual vehicles of the group. Examples of such tasks are relocation of a vehicle from one place to another, transport of freight from one place to another, image recording in a specific place, or interaction with another vehicle like exchange of fuel, freight, or passengers, or transfer of information.

If tasks can be divided into sub-tasks, a task is called complex. A task is called elementary if it cannot be divided further within the task model.

The capabilities of the vehicles can be represented in the task model, for example through the corresponding mission tasks.

The planning device can use the task model and the mission tasks comprised therein, to generate a mission plan that fulfils the mission objectives by concatenating mission tasks, i.e. linking of objects or elements of the mission with the mission objectives and vehicles.

### BRIEF DESCRIPTION OF THE DRAWINGS

The above, as well as additional objects, features and advantages of aspects and embodiments of the present disclosure, will be better understood through the following illustrative and non-limiting detailed description of embodiments of the present disclosure, with reference to the appended drawings, where the same reference numerals will be used for similar elements, wherein:
Fig. 1 shows a general overview of the possible applications of the present disclosure.
Fig. 2 shows exemplary embodiments of the present disclosure.
Fig. 3 shows a schematic view of a mission plan and the mission tasks therein.
Fig. 4 shows two different mission plans for the same mission objective.

### DETAILED DESCRIPTION

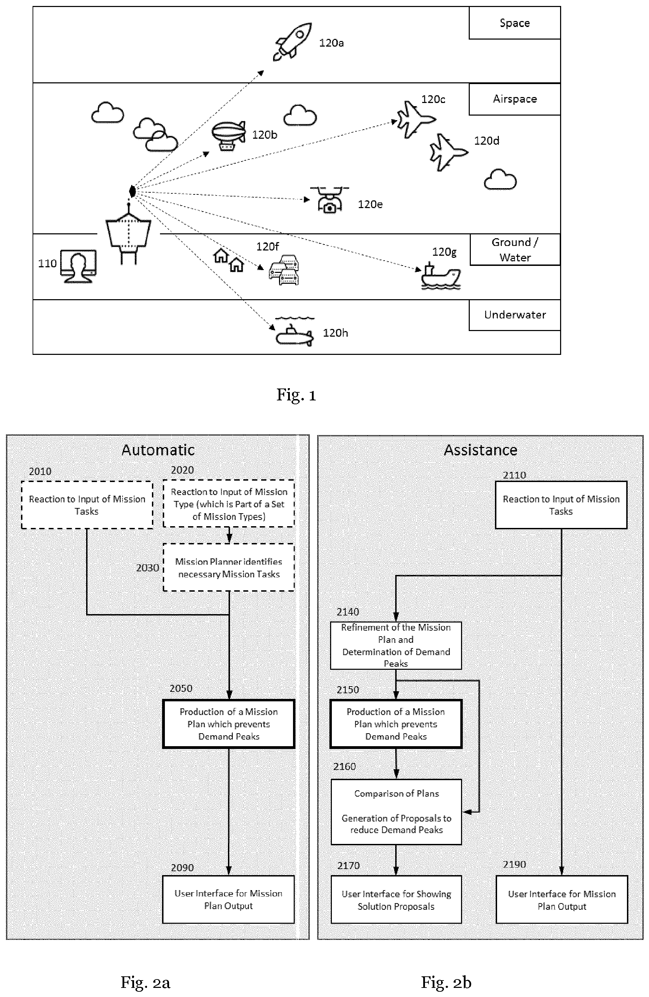

Fig. 1 shows exemplary application areas of the present disclosure. In an exemplary embodiment of the present disclosure one operator 110 can be responsible for planning the mission for and controlling of one or more manned or unmanned vehicles 120 of different type, e.g. space crafts, aircrafts, drones, cars, ships, submarines, etc.

Fig. 2 shows a schematic view of exemplary embodiments of the present disclosure for supporting vehicle control to reduce operator demands and demand peaks. Fig 2a shows an exemplary embodiment, where the inventive method optimizes a mission plan generated by a mission planning device automatically. Fig. 2b shows an exemplary embodiment, where the inventive method optimizes a mission plan produced by an operator. Both exemplary embodiments employ the inventive method.

In the first exemplary embodiment, shown in Fig. 2a, the inventive method is employed in an automatic control process, where the planning device generates a mission plan automatically. The planning algorithm that is stored in the planning device generates the mission plan with the mission task arranged in a way that temporal overlapping of operator tasks that are difficult to be performed in parallel is avoided. Thereby demand peaks during the execution of the mission plan are avoided.

The planning device supports the operator in executing at least one type of mission. The planning device obtains one or more mission objectives and/or mission tasks via the input unit from the operator or from another device. In particular, the operator can specify a mission objective in step 2010 and a mission type in step 2020.

The planning device then optionally uses a planning algorithm to generate missing mission tasks, for example an HTN (Hierarchical Task Network) or PDDL (Planning Domain Definition Language) algorithm. The planning device can identify mission tasks required for mission objective fulfilment in step 2030.

The planning device can then in step 2050 employ the inventive method and determine operator tasks that will occur during the mission using the task model and generate a mission plan using a cost metric on the basis of the determined operator tasks. For each mission task in the mission plan, the planning device adds the operator tasks and the linked elements that are stored in the task model.

The planning device then uses, as an example, the constraint optimization, scheduling, MILP-algorithm (Mixed-Integer Linear Programming Algorithm) with objective function as detailed below to assign the mission tasks optimally.

The resulting mission plan can be provided to the operator in step 2090.

In the second exemplary embodiment, shown in Fig. 2b, the inventive method is employed in an assisting control process, where the operator can plan mission tasks without a planning device. The planning device receives the mission plan in step 2110.

The resulting mission plan can be provided to the operator in step 2190. The planning device can then optionally determine demand peaks in the mission plan manufactured by the operator in step 2140.

Therefore, the planning algorithm that is stored in the planning device analyzes the manufactured mission plan, which has specified execution points for individual mission tasks in the mission plan. The specified execution points, for example starting point and end point, are modelled by prerequisites. The processing unit of the planning device analyzes the manufactured mission plan without modifying the mission tasks and in particular without modifying their execution order, times, or intervals. The operating tasks, that are added from the task model are planned and inserted with ordering into the time schedule according to their task specific constraints.

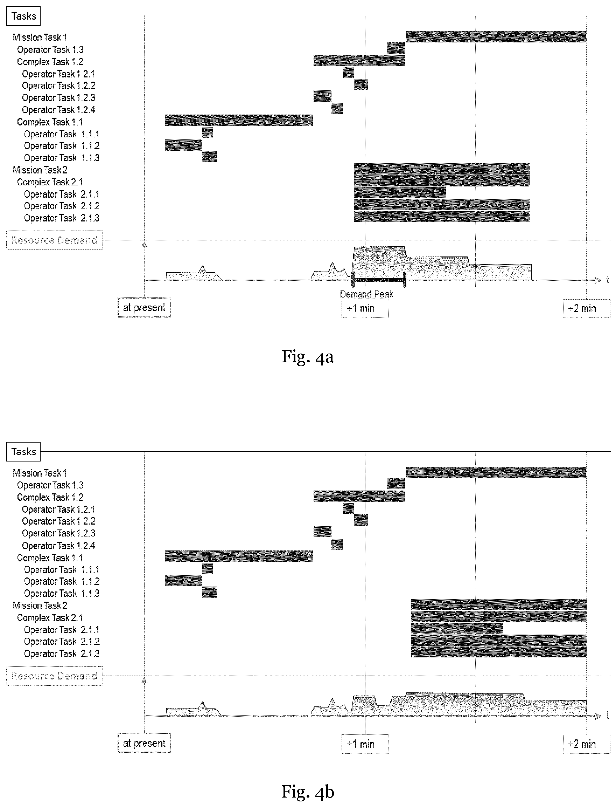

A detailed structural view of the mission plan can be transferred to a temporal view. To achieve this, every task of the detailed plan is planned and assigned an order and time to predict, when the elementary operator tasks are executed by the operator. The individual levels of the detailed mission plan are planned from the highest level to the elementary (lowest) level. The result of this planning process can be indicated as a timeline view of the plan, as shown in Fig. 4.

In step 2150, the planning device can generate an internal mission plan by employing the inventive method using the task model. Thereby operator tasks that will occur during the mission are determined, and, the internal mission plan can be generated using a cost metric on the basis of the determined operator tasks. The internal mission plan generated in step 2150 is for internal reference only, and is not provided to the operator.

The algorithm checks the manufactured plan for temporal overlapping or overlapping of operator tasks that are difficult to be performed in parallel. The output unit can indicate the demand peaks and optionally the reasons for the predicted occurrence of the determined demand peaks.

In step 2160, the demand peaks of the mission plan manufactured by the operator determined in step 2140 are compared with the demand peaks of the internal mission plan generated by the planning device in step 2150. If it is determined that the internal mission plan comprises less or less extensive demand peaks than the mission plan manufactured by the operator, the planning device can indicate this to the operator and calculate and provide alternative mission plan elements to the operator on the basis of the internal mission plan in step 2170.

The planning device can determine whether a better arrangement is available and thus the determined demand peaks can be avoided. Therefore, the temporal constraints of mission tasks can be dissolved or relaxed, and with another iteration of the same scheduling algorithm, again a solution to the problem is calculated. As one implementation, all constraints can be dissolved at the same time, or alternatively, a systematic constraint by constraint dissolution is performed. For this different approaches are possible, for example, brute force, or heuristic methods.

If the planning device by using the algorithm finds a better mission plan alternative that is less demanding for the operator, than the manufactured mission plan, the planning device can indicate beneficial modifications to the manufactured mission plan on the output unit. These modifications can include reordering of mission tasks to avoid or reduce the determined demand peaks. It can also include modifications of assignment of a task to a resource or vehicle.

In further detail, the processing unit of the planning device uses for example a constraint optimization, scheduling, MILP-algorithm with target function for resolving the planning problem. For overlapping operator tasks, costs are incurred which are dependent from the overlapping time. These costs are modelled as a part of the target function. The minimizing of the target function results in minimizing of overlapping of operator tasks, in that a temporal assignment of the task as well as an assignment of a vehicle to the task is modified.

If for a certain operator task the task model has stored that operator resources are required to perform this operator task (demand on mental resources), an even finer resolution can be implemented by using a conflict value, which represents whether a simultaneous processing of two or more operator tasks can be performed. For example, two tasks requiring the same operator resource are assigned a higher conflict value than two tasks that require different operator resources. This can be considered in the technical process of the mission planning. By using the cost function, the planning device optimizes the mission plan in that avoiding parallel operator tasks with a higher conflict value is assigned a higher priority than avoiding parallel operator tasks with a comparatively lower conflict value.

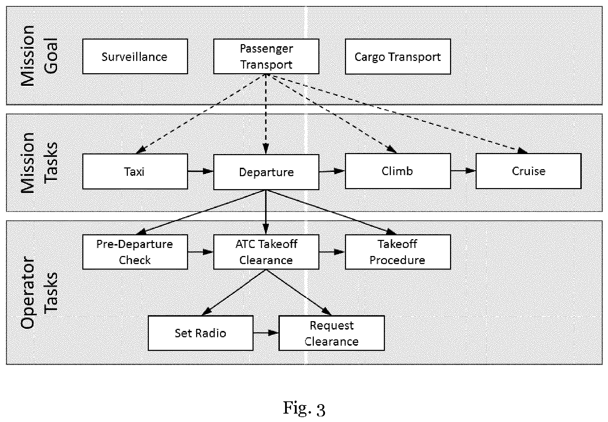

Fig. 3 shows an overview of mission objective, mission tasks, and operator tasks. Mission objectives can be linked hierarchically to particular mission tasks. Alternatively, assignment of mission tasks to mission objectives can be performed dynamically during the planning process on the basis of constraints and task results.

For generating the mission plan, the planning device adds all operator tasks to the mission plan that are linked to the mission tasks of the mission plan. This is done under consideration of all constraints and other conditions. The hierarchical relationships between the mission tasks and operator tasks that are defined in the task model are used. Then the relationships are resolved, and possibly further tasks are added, until all relationships are resolved. If complex tasks are part of the mission plan, the planning device divides them into sub-tasks, until all tasks are elementary. Each task can be added as a node to the mission plan. This is depicted exemplary in Fig. 3. The result is a detailed mission plan on the elementary operator task level.

Fig. 4 shows two mission plans comprising exactly the same mission tasks. For both mission plans a predicted demand progression, which is likely to be occurring during the respective mission, is depicted. In Fig. 4a, the occurring demand peak for the operator has not been resolved. In Fig. 4b, the mission plan has been improved to reduce the severity of the operator demand peak. The difference between Figs. 4a and 4b indicates only a portion of the inventive method and the corresponding steps can be executed repeatedly to fully optimize a mission plan with regard to operator demand.

In an advantageous further embodiment operator demand information, indicating the demand of operator resources are stored for each operator task. The planning device simulates the execution of the mission plan by step-wise calculating the required resources for all simultaneously executed tasks. An algorithm processes the resources of the simultaneously executed operator tasks and determines, for example via resource conflicts, the required resources of the overall task situation at that time. If the required resources exceed a predetermined threshold, for example the amount of available resources or a particular percentage thereof, it is determined that the operator faces a demand peak, as depicted e.g. in Fig. 4, in the situation at that time. Since a demand peak can e.g. lead to performance loss, the optimization aims to avoid this.

While some embodiments have been described in detail it is to be understood that aspects and embodiments of the disclosure can take many forms. In particular, the claimed subject matter may be practiced or implemented differently from the examples described and the described features and characteristics may be practiced or implemented in any combination. The embodiments shown herein are intended to illustrate rather than to limit the invention as defined by the claims.

### Reference list

- 110: Operator
- 120a - 120h: Vehicles
- 2010: Step of specifying a mission objective
- 2020: Step of specifying a mission type
- 2030: Step of identifying mission tasks
- 2050: Step of generating a mission plan
- 2090: Step of providing the mission plan to the operator
- 2110: Step of receiving a mission plan
- 2140: Step of determining demand peaks
- 2150: Step of generating a mission plan
- 2160: Step of comparing demand peaks and calculate modifications
- 2170: Step of indicating modifications
- 2190: Step of providing the mission plan to the operator

## Claims

1. A computer-implemented method for vehicle control support, the method comprising:
obtaining, by a planning device, via an input unit of the planning device, mission information, the mission information at least comprising mission task information for at least one mission task, wherein the at least one mission task is vehicle-specific, employing capabilities of individual vehicles of a group of vehicles;
generating (2050, 2150), by a processing unit of the planning device,
operator task information for at least one operator task on the basis of the mission task information and a task model that is stored in the processing unit, wherein the task model represents the capabilities of the vehicles of the group of vehicles, and wherein the operator task information comprises operator demand information;
wherein the operator demand information comprises predictions for each corresponding operator task of
whether operator attention is required;
at what time operator attention is required;
how long operator attention is required; and
what type of attention is required; and
a generated mission plan on the basis of the mission task information, the operator task information, and the operator demand information using a cost metric stored in the processing unit, wherein the generated mission plan is generated to minimize temporal overlap of predicted operator attention for the operator tasks, on the basis of the type of attention,
wherein the obtaining the mission information further comprises:
receiving (2110) a manufactured mission plan, via an input unit of the planning device; and
determining (2140) demand peaks in the manufactured mission plan, and in the generated mission plan, wherein demand peaks indicate temporal overlap of operator attention for the operator tasks of the manufactured mission plan or of the generated mission plan; and
wherein the method further comprises:
comparing (2160) the determined demand peaks of the manufactured mission plan with the demand peaks of the generated mission plan; and
if it is determined that the generated mission plan comprises less or less extensive demand peaks than the manufactured mission plan, calculating (2160) proposed modifications to the manufactured mission plan which reduce the demand peaks in the manufactured mission plan; and
indicating (2170) the calculated proposed modifications via an output unit of the planning device.

2. The method according to claim 1, wherein the step of obtaining further comprises:
receiving (2010) mission objective information via an input unit of the planning device;
receiving (2020) mission type information via an input unit of the planning device; and
identifying (2030) mission tasks required for the mission on the basis of the mission type information on the basis of the task model.

3. The method according to claim 2, further comprising:
providing (2090) the generated mission plan via an output unit of the planning device.

4. The method according to claim 1, further comprising:
providing (2190) at least one of the determined demand peaks, the proposed modifications, the manufactured mission plan, and a modified mission, which incorporates the proposed modifications to the manufactured mission plan, together or individually, via the output unit of the planning device.

5. A planning device, configured to execute a method according to one of claims 1 to 4, comprising an input unit, a processing unit, and an output unit.

6. A vehicle equipped with a planning device according to claim 5.

7. A computer program product including a program for a processing device, comprising software code portions for performing the steps of any one of claims 1 to 4 when the program is run on the processing device.

8. A computer program product according to claim 7, wherein the computer program product comprises a computer-readable medium on which the software code portions are stored, wherein the program is directly loadable into an internal memory of the processing device.

## Patentansprüche

1. Computerimplementiertes Verfahren zur Fahrzeugsteuerungsunterstützung, wobei das Verfahren folgende Schritte umfasst:
Erhalten, durch eine Planungsvorrichtung, über eine Eingabeeinheit der Planungsvorrichtung, von Missionsinformationen, wobei die Missionsinformationen mindestens Missionsaufgabeninformationen für mindestens eine Missionsaufgabe umfassen, wobei die mindestens eine Missionsaufgabe fahrzeugspezifisch ist, wobei Fähigkeiten einzelner Fahrzeuge einer Gruppe von Fahrzeugen eingesetzt werden;
Erzeugen (2050, 2150), durch eine Verarbeitungseinheit der Planungsvorrichtung,
von Bedieneraufgabeninformationen für mindestens eine Bedieneraufgabe auf der Basis der Missionsaufgabeninformationen und eines Aufgabenmodells, das in der Verarbeitungseinheit gespeichert ist, wobei das Aufgabenmodell die Fähigkeiten der Fahrzeuge der Gruppe von Fahrzeugen darstellt und wobei die Bedieneraufgabeninformationen Bedienerbedarfsinformationen umfassen;
wobei die Bedienerbedarfsinformationen Vorhersagen für jede entsprechende Bedieneraufgabe umfassen,
ob Bedieneraufmerksamkeit erforderlich ist;
zu welchem Zeitpunkt Bedieneraufmerksamkeit erforderlich ist;
wie lange Bedieneraufmerksamkeit erforderlich ist; und
welcher Aufmerksamkeitstyp erforderlich ist; und
eines erzeugten Missionsplans auf der Basis der Missionsaufgabeninformationen, der Bedieneraufgabeninformationen und der Bedienerbedarfsinformationen unter Verwendung einer in der Verarbeitungseinheit gespeicherten Kostenmetrik, wobei der erzeugte Missionsplan erzeugt wird, um eine zeitliche Überlappung von vorhergesagter Bedieneraufmerksamkeit für die Bedieneraufgaben auf der Basis des Aufmerksamkeitstyps zu minimieren,
wobei das Erhalten der Missionsinformationen ferner folgende Schritte umfasst:
Empfangen (2110) eines hergestellten Missionsplans über eine Eingabeeinheit der Planungsvorrichtung; und
Bestimmen (2140) von Bedarfsspitzen in dem hergestellten Missionsplan und in dem erzeugten Missionsplan, wobei Bedarfsspitzen eine zeitliche Überlappung von Bedieneraufmerksamkeit für die Bedieneraufgaben des hergestellten Missionsplans oder des erzeugten Missionsplans angeben; und
wobei das Verfahren ferner folgende Schritte umfasst:
Vergleichen (2160) der bestimmten Bedarfsspitzen des hergestellten Missionsplans mit den Bedarfsspitzen des erzeugten Missionsplans; und
wenn bestimmt wird, dass der erzeugte Missionsplan weniger oder weniger umfangreiche Bedarfsspitzen als der hergestellte Missionsplan umfasst, Berechnen (2160) von vorgeschlagenen Modifikationen an dem hergestellten Missionsplan, die die Bedarfsspitzen in dem hergestellten Missionsplan reduzieren; und
Angeben (2170) der berechneten vorgeschlagenen Modifikationen über eine Ausgabeeinheit der Planungsvorrichtung.

2. Verfahren nach Anspruch 1, wobei der Schritt des Erhaltens ferner folgende Schritte umfasst:
Empfangen (2010) von Missionszielinformationen über eine Eingabeeinheit der Planungsvorrichtung;
Empfangen (2020) von Missionstypinformationen über eine Eingabeeinheit der Planungsvorrichtung; und
Identifizieren (2030) von Missionsaufgaben, die für die Mission erforderlich sind, auf der Basis der Missionstypinformationen auf der Basis des Aufgabenmodells.

3. Verfahren nach Anspruch 2, ferner umfassend:
Bereitstellen (2090) des erzeugten Missionsplans über eine Ausgabeeinheit der Planungsvorrichtung.

4. Verfahren nach Anspruch 1, ferner umfassend:
Bereitstellen (2190) mindestens einer der bestimmten Bedarfsspitzen, der vorgeschlagenen Modifikationen, des hergestellten Missionsplans und einer modifizierten Mission, die die vorgeschlagenen Modifikationen an dem hergestellten Missionsplan aufweist, zusammen oder einzeln, über die Ausgabeeinheit der Planungsvorrichtung.

5. Planungsvorrichtung, die eingerichtet ist, ein Verfahren nach einem der Ansprüche 1 bis 4 auszuführen, umfassend eine Eingabeeinheit, eine Verarbeitungseinheit und eine Ausgabeeinheit.

6. Fahrzeug, das mit einer Planungsvorrichtung nach Anspruch 5 ausgestattet ist.

7. Computerprogrammprodukt, das ein Programm für eine Verarbeitungsvorrichtung aufweist, umfassend Softwarecodeabschnitte zum Durchführen der Schritte nach einem der Ansprüche 1 bis 4, wenn das Programm auf der Verarbeitungsvorrichtung ausgeführt wird.

8. Computerprogrammprodukt nach Anspruch 7, wobei das Computerprogrammprodukt ein computerlesbares Medium umfasst, auf dem die Softwarecodeabschnitte gespeichert sind, wobei das Programm direkt in einen internen Speicher der Verarbeitungsvorrichtung ladbar ist.

## Revendications

1. Procédé mis en œuvre par ordinateur pour une assistance de commande de véhicule, le procédé comprenant :
l'obtention, par un dispositif de planification, via une unité d'entrée du dispositif de planification, d'informations de mission, les informations de mission comprenant au moins des informations de tâche de mission pour au moins une tâche de mission, dans lequel l'au moins une tâche de mission est spécifique au véhicule, employant des capacités de véhicules individuels d'un groupe de véhicules ;
la génération (2050, 2150), par une unité de traitement du dispositif de planification,
d'informations de tâche d'opérateur pour au moins une tâche d'opérateur sur la base des informations de tâche de mission et d'un modèle de tâche qui est stocké dans l'unité de traitement, dans lequel le modèle de tâche représente les capacités des véhicules du groupe de véhicules, et dans lequel les informations de tâche d'opérateur comprennent des informations de demande d'opérateur ;
dans lequel les informations de demande d'opérateur comprennent des prédictions pour chaque tâche d'opérateur correspondante de
si l'attention de l'opérateur est requise ;
à quel moment l'attention de l'opérateur est requise ;
combien de temps l'attention de l'opérateur est requise ; et
quel type d'attention est requis ; et
un plan de mission généré sur la base des informations de tâche de mission, des informations de tâche d'opérateur, et des informations de demande d'opérateur en utilisant une métrique de coût stockée dans l'unité de traitement, dans lequel le plan de mission généré est généré pour minimiser un chevauchement temporel de l'attention de l'opérateur prédite pour les tâches d'opérateur, sur la base du type d'attention,
dans lequel l'obtention des informations de mission comprend en outre :
la réception (2110) d'un plan de mission élaboré, via une unité d'entrée du dispositif de planification ; et
la détermination (2140) de pics de demande dans le plan de mission élaboré, et dans le plan de mission généré, dans lequel des pics de demande indiquent un chevauchement temporel de l'attention de l'opérateur pour les tâches d'opérateur du plan de mission élaboré ou du plan de mission généré ; et
dans lequel le procédé comprend en outre :
la comparaison (2160) des pics de demande déterminés du plan de mission élaboré avec les pics de demande du plan de mission généré ; et
s'il est déterminé que le plan de mission généré comprend des pics de demande moins nombreux ou moins étendus que le plan de mission élaboré, le calcul (2160) de modifications proposées au plan de mission élaboré qui réduisent les pics de demande dans le plan de mission élaboré ; et
l'indication (2170) des modifications proposées calculées via une unité de sortie du dispositif de planification.

2. Procédé selon la revendication 1, dans lequel l'étape d'obtention comprend en outre :
la réception (2010) d'informations d'objectif de mission via une unité d'entrée du dispositif de planification ;
la réception (2020) d'informations de type de mission via une unité d'entrée du dispositif de planification ; et
l'identification (2030) de tâches de mission requises pour la mission sur la base des informations de type de mission et du modèle de tâche.

3. Procédé selon la revendication 2, comprenant en outre :
la fourniture (2090) du plan de mission généré via une unité de sortie du dispositif de planification.

4. Procédé selon la revendication 1, comprenant en outre :
la fourniture (2190) d'au moins l'un des pics de demande déterminés, des modifications proposées, du plan de mission élaboré, et d'une mission modifiée, qui incorpore les modifications proposées au plan de mission élaboré, ensemble ou individuellement, via l'unité de sortie du dispositif de planification.

5. Dispositif de planification, configuré pour exécuter un procédé selon l'une des revendications 1 à 4, comprenant une unité d'entrée, une unité de traitement, et une unité de sortie.

6. Véhicule équipé d'un dispositif de planification selon la revendication 5.

7. Produit de programme informatique comprenant un programme pour un dispositif de traitement, comprenant des parties de code logiciel pour effectuer les étapes de l'une quelconque des revendications 1 à 4 lorsque le programme est exécuté sur le dispositif de traitement.

8. Produit de programme informatique selon la revendication 7, dans lequel le produit de programme informatique comprend un support lisible par ordinateur sur lequel les parties de code logiciel sont stockées, dans lequel le programme peut être chargé directement dans une mémoire interne du dispositif de traitement.
